# EUROPEAN PATENT APPLICATION

(11) **EP 4 745 084 A1**
(43) Date of publication of application: **20.05.2026**
(21) Application number: 24839403.3
(22) Date of filing: 13.06.2024
(51) Int. Cl.: C01B 33/18, G03G 9/097

(54) **SURFACE-TREATED SOL-GEL SILICA PARTICLES, METHOD FOR PRODUCING SURFACE-TREATED SOL-GEL SILICA PARTICLES, AND TONER EXTERNAL ADDITIVE FOR ELECTROSTATIC IMAGE DEVELOPMENT**

(30) Priority: 10.07.2023 JP 2023112966
(71) Applicant: SHIN-ETSU CHEMICAL CO., LTD., Tokyo 100-0005 (JP)
(72) Inventor: MATSUMURA Kazuyuki, Annaka-shi, Gunma 379-0224 (JP)
(74) Representative: Angerhausen, Christoph
(86) International application number: PCT/JP2024/021530
(87) International publication number: WO 2025/013507

(57) **Abstract**

Provided are surface-treated sol-gel silica particles, etc. which exhibit reduced changes in the charge amount during environmental changes and, when used as a toner external additive, can impart suitable printing properties to a toner. A surface-treated sol-gel silica particle having, on the surface thereof, an R²SiO_{3/2} unit and an R⁴₃SiO_{1/2} unit, wherein R² and R⁴ represent a monovalent hydrocarbon group, and satisfying the conditions (1) to (7) in which (1) a median diameter measured by a dynamic light scattering method is 50 to 300 nm; (2) an average circularity is 0.80 to 1.0; (3) a refractive index is 1.380 to 1.420; (4) a true density is 1.7000 g/cm³ or more and less than 1.9000 g/cm³; (5) a volume resistivity is 10¹¹ Ω·cm or more; (6) a ratio represented by water vapor adsorption specific surface area/nitrogen adsorption specific surface area is 2.00 to 10.0; and (7) a moisture absorption rate after exposure at 30°C/90% RH for 2 hours is 6.0% to 11% by mass, with respect to a dry mass after drying at 150°C for 1 day.

## Description

### Technical Field

The present invention relates to surface-treated sol-gel silica particles, a method for producing the same, and an external additive for electrostatic image developing toner used for developing electrostatic images in electrophotography, electrostatic recording, and the like.

### Background Art

Dry developers used in electrophotography or the like are broadly classified into a one-component developer which directly utilizes a toner in which a colorant is dispersed in a binder resin, and a two-component developer obtained by mixing the toner with a carrier. When a copying operation is performed using these developers, for achieving process adaptability, the developers are required to have excellent flowability, anti-caking property, fixability, chargeability, cleanability, and the like. In particular, for enhancing the flowability, anti-caking property, fixability, and cleanability, inorganic fine particles are commonly used as an external additive for toner.

However, the dispersibility of inorganic fine particles significantly affects toner properties; when the dispersibility is nonuniform, desired properties such as flowability, anti-caking property, and fixability may not be obtained, or the cleanability may become insufficient, causing toner adhesion or the like on a photosensitive member, which may result in black spot-like image defects. In order to improve these points, various inorganic fine particles whose surfaces have been hydrophobically treated have been proposed.

Recently, there have also been demands for higher-speed copying machines and lower energy consumption, and higher degradation resistance than that of conventional toners has come to be required. When a toner does not have high degradation resistance, the transfer efficiency of the toner cannot be maintained at a high level from immediately after the start to the end of use. As one countermeasure, a technique for suppressing toner degradation utilizing the spacer effect of a large-particle toner external additive has been proposed (Patent documents 1 and 2).

It has also been common to use both a small-particle toner external additive and a large-particle toner external additive in combination as toner external additives. The presence of the large-particle toner external additive adhering to the surface of toner particles reduces the frequency at which the small-particle toner external additive adhering to the toner particle surface in the vicinity thereof directly receives external forces such as a shearing force and an impact force, thereby preventing the small-particle toner external additive from being embedded into the toner particle surface by the external forces (spacer effect), making it possible to suppress toner degradation.

In addition, externally adding the large-particle toner external additive increases the likelihood of the toner separating from a photosensitive member, allowing the toner deposited on the photosensitive member to be quickly transferred onto paper, making it possible to maintain the transfer efficiency at a high level. Therefore, the large-particle toner external additive is considered to also function as a transfer aid.

As a large-particle toner external additive which is expected to exhibit the spacer effect, fumed silica particles produced by known combustion methods have been used. However, since a sol-gel method has recently allowed production of spherical silica particles having a large particle size with uniform particle size distribution, a technique which utilizes spherical silica particles having an average particle size of about 50 to 150 nm as an external additive has been proposed (Patent document 3).

It has also been disclosed that, for suppressing the embedding of the external additive and maintaining high developability and transferability from initial stages and over time, it is effective to use large-particle monodisperse spherical silica having a true specific gravity of 1.9 or less (Patent document 4). The low-specific-gravity monodisperse spherical silica is known to roll and therefore be easily interposed between a blade and an image-holding member, thereby exhibiting an effective friction-reducing effect and being effective for improving cleanability (Patent documents 4 and 5).

When the particle size of spherical silica particles is increased, the surface area per unit mass of the silica particles decreases, resulting in a reduction in charge amount and a weakening of the Coulomb force, which dominates the adhesive force between the silica particles and toner particles. Therefore, the adhesiveness to the toner particles decreases, making the silica particles easily detach from the toner particles. It is known that, if the silica particles detach from the toner particles, the detached silica particles or the toner particles cause contamination of a photosensitive member, a charging roller, or a developing roller, or chipping of a cleaning blade, thereby causing image defects attributable to the member contamination or the like (Patent document 3).

In general, the charge amount of toner and silica particles varies depending on the environment in which they are used; under high-temperature and high-humidity conditions, the charge amount decreases, and as a result, the adhesiveness of the silica particles to the toner particles decreases, making the silica particles more likely to detach from the toner particles. On the other hand, under low-temperature and low-humidity conditions, the charge amount becomes excessively high, and the charge carried by the toner easily transfers to other substances, causing image degradation.

As described above, silica particles used as toner external additives have a problem in that charge control is difficult during environmental changes, and silica particles having suitable charge control have been demanded.

### Prior Art Documents

### Patent documents

Patent document 1: JP-A-H06-027718
Patent document 2: JP-A-H11-143118
Patent document 3: JP-A-2007-264142
Patent document 4: JP-A-2001-066820
Patent document 5: JP-A-2005-004051

### Summary of Invention

### Technical Problem

Accordingly, an object of the present invention is to provide surface-treated sol-gel silica particles which exhibit reduced changes in the charge amount during environmental changes and, when used as a toner external additive, can impart suitable printing properties to a toner, a method for producing the surface-treated sol-gel silica particles, and a toner external additive including the surface-treated sol-gel silica particles.

### Solution to Problem

The inventor of the present invention conducted extensive studies in order to achieve the object and, as a result, found that surface-treated sol-gel silica particles having specific siloxane units on their surfaces and having specific particle size, average circularity, refractive index, true density, ratio of water vapor adsorption specific surface area to nitrogen adsorption specific surface area, and moisture absorption rate exhibit reduced changes in the charge amount during environmental changes and impart suitable printing properties to a toner when used as a toner external additive, thereby completing the present invention.

Specifically, the present invention provides surface-treated sol-gel silica particles described below, a method for producing the surface-treated sol-gel silica particles, and an external additive for electrostatic image developing toner, which are defined as:
<1> A surface-treated sol-gel silica particle comprising, on a surface thereof,
   an R²SiO_{3/2} unit, wherein R² represents a substituted or unsubstituted monovalent hydrocarbon group having 1 to 20 carbon atoms; and
   an R⁴₃SiO_{1/2} unit, wherein R⁴ represents an identical or different, substituted or unsubstituted monovalent hydrocarbon group having 1 to 6 carbon atoms,
   wherein the surface-treated sol-gel silica particle has:
      (1) a median diameter, measured by a dynamic light scattering method, of 50 to 300 nm;
      (2) an average circularity of 0.80 to 1.0;
      (3) a refractive index of 1.380 to 1.420;
      (4) a true density of 1.7000 g/cm³ or more and less than 1.9000 g/cm³;
      (5) a volume resistivity of 10¹¹ Ω·cm or more;
      (6) a ratio, represented by water vapor adsorption specific surface area/nitrogen adsorption specific surface area, of 2.00 to 10.0; and
      (7) a moisture absorption rate, after exposure at 30°C/90% RH for 2 hours, of 6.0% to 11% by mass, with respect to a dry mass after drying at 150°C for 1 day.
<2> The surface-treated sol-gel silica particle according to <1>, wherein R² and R⁴ are methyl groups.
<3> A method for producing the surface-treated sol-gel silica particle according to <1>, the method comprising the steps (A1) to (A6) of:
   (A1) subjecting a tetrafunctional silane compound represented by formula (I) below, a partially hydrolyzed and condensed product thereof, or a mixture of the tetrafunctional silane compound and the partially hydrolyzed and condensed product to hydrolysis and condensation, in a liquid mixture containing a hydrophilic organic solvent and water, in the presence of a basic substance, to obtain a mixed-solvent dispersion of hydrophilic sol-gel silica particles,

      Si(OR¹)₄ (I)

      wherein R¹ independently represents a monovalent hydrocarbon group having 1 to 6 carbon atoms;
   (A2) replacing the hydrophilic organic solvent in a dispersion medium of the mixed-solvent dispersion of hydrophilic sol-gel silica particles obtained in the step (A1) with water, to obtain an aqueous dispersion of hydrophilic sol-gel silica particles.
   (A3) refluxing the aqueous dispersion of hydrophilic sol-gel silica particles obtained in the step (A2) at a reflux temperature of water for 5 hours or more;
   (A4) adding a trifunctional silane compound represented by formula (II) below, a partially hydrolyzed and condensed product thereof, or a mixture of the trifunctional silane compound and the partially hydrolyzed and condensed product to the aqueous dispersion of hydrophilic sol-gel silica particles obtained after undergoing the step (A3), in an amount of 0.01 to 0.5 mol per 1 mol of Si atoms in the hydrophilic sol-gel silica particles, to introduce an R²SiO_{3/2} unit onto a surface of the hydrophilic sol-gel silica particles to obtain an aqueous dispersion of preliminarily surface-treated sol-gel silica particles,

      R²Si(OR³)₃ (II)

      wherein R² represents a monovalent hydrocarbon group having 1 to 20 carbon atoms, the hydrocarbon group being optionally substituted with a halogen atom, and R³ independently represents a monovalent hydrocarbon group having 1 to 6 carbon atoms;
   (A5) replacing the dispersion medium of the aqueous dispersion of preliminarily surface-treated sol-gel silica particles obtained in the step (A4) with a ketone-based solvent to obtain a ketone-based solvent dispersion of preliminarily surface-treated sol-gel silica particles; and
   (A6) adding a silazane compound represented by formula (III) below, a monofunctional silane compound represented by formula (IV) below, or a mixture thereof, to the ketone-based solvent dispersion of preliminarily surface-treated sol-gel silica particles obtained in the step (A5), in an amount of 0.1 to 0.5 mol per 1 mol of Si atoms in the preliminarily surface-treated sol-gel silica particles, to introduce an R⁴₃SiO_{1/2} unit onto a surface of the preliminarily surface-treated sol-gel silica particles to obtain surface-treated sol-gel silica particles,

      R⁴₃SiNHSiR⁴₃ (III)

      R⁴₃SiX (IV)

      wherein R⁴ independently represents a monovalent hydrocarbon group having 1 to 6 carbon atoms, the hydrocarbon group being optionally substituted with a halogen atom, and X represents a hydroxyl group, an alkoxy group having 1 to 6 carbon atoms, or a chlorine atom.
<4> The method for producing the surface-treated sol-gel silica particle according to <3>, wherein R² and R⁴ are methyl groups.
<5> An external additive for an electrostatic image developing toner, the external additive comprising the surface-treated sol-gel silica particle according to <1> or <2>.

### Advantageous Effects of Invention

The surface-treated sol-gel silica particles according to the present invention exhibit reduced changes in the charge amount during environmental changes and impart suitable printing properties to a toner when used as a toner external additive, and are therefore extremely useful as a toner external additive.

### Description of Embodiments

The present invention will be described in detail below.

### [Surface-Treated Sol-Gel Silica Particles]

The surface-treated sol-gel silica particles according to the present invention are surface-treated sol-gel silica particles having, on the surface thereof, an R²SiO_{3/2} unit (where R² represents a substituted or unsubstituted monovalent hydrocarbon group having 1 to 6 carbon atoms) and an R⁴₃SiO_{1/2} unit (where R⁴ represents an identical or different, substituted or unsubstituted monovalent hydrocarbon group having 1 to 6 carbon atoms), and satisfy all of the following conditions (1) to (7) in which:
(1) a median diameter measured by a dynamic light scattering method is 50 to 300 nm;
(2) an average circularity is 0.8 to 1.0;
(3) a refractive index is 1.38 to 1.42;
(4) a true density is 1.7 g/cm³ or more and less than 1.9 g/cm³;
(5) a volume resistivity is 10¹¹ Ω·cm or more;
(6) a ratio represented by water vapor adsorption specific surface area/nitrogen adsorption specific surface area is 2 to 10; and
(7) a moisture absorption rate after exposure at 30°C/90% RH for 2 hours is 6% to 11% by mass, with respect to a dry mass after drying at 150°C for 1 day.

R² represents a monovalent hydrocarbon group having 1 to 20 carbon atoms, preferably a monovalent hydrocarbon group having 1 to 8 carbon atoms, and more preferably a monovalent hydrocarbon group having 1 to 3 carbon atoms. Examples of the monovalent hydrocarbon group represented by R² include alkyl groups such as a methyl group, an ethyl group, a propyl group, an isopropyl group, a butyl group, a hexyl group, an octyl group, and a decyl; cycloalkyl groups such as a cyclohexyl group; alkenyl groups such as a vinyl group, an allyl group, an n-butenyl group, an n-hexenyl group, and an n-octenyl group; and aryl groups such as a phenyl group. A methyl group is particularly preferable. Some or all of the hydrogen atoms of these monovalent hydrocarbon groups may be substituted with halogen atoms such as fluorine, chlorine, or bromine atoms, preferably fluorine atoms.

R⁴ represents a monovalent hydrocarbon group having 1 to 6 carbon atoms, preferably an alkyl group having 1 to 4 carbon atoms, and particularly preferably an alkyl group having 1 or 2 carbon atoms. Examples of the monovalent hydrocarbon group represented by R³ include a methyl group, an ethyl group, a propyl group, a butyl group, a vinyl group, and a phenyl group. Preferable examples are a methyl group, an ethyl group, a propyl group, and a butyl group, and particularly preferable examples are a methyl group and an ethyl group. Some or all of the hydrogen atoms of these monovalent hydrocarbon groups may be substituted with halogen atoms such as fluorine, chlorine, or bromine atoms, preferably fluorine atoms.

By possessing a combination of the above physical properties (1) to (7), the surface-treated sol-gel silica particles according to the present invention exhibit reduced changes in the charge amount during environmental changes and impart suitable printing properties to a toner when used as a toner external additive.

### (1) Median Diameter Measured by Dynamic Light Scattering Method

The median diameter of the surface-treated sol-gel silica particles according to the present invention, as measured by dynamic light scattering, is 50 to 300 nm, and preferably 50 to 200 nm. It is not preferable that the median diameter be less than 50 nm because, in such a case, the surface-treated sol-gel silica particles cannot exhibit a sufficient spacer effect when used as a toner external additive. It is also not preferable that the median diameter be more than 300 nm because, in such a case, the decrease in surface area tends to cause a reduction in the charge amount or the adhesive force to toner particles.

The median diameter is a value calculated from the volume-based particle size distribution of the surface-treated sol-gel silica particles measured by dynamic light scattering. The dynamic light scattering method refers to a method in which a dispersion of silica particles is irradiated with a laser beam using a dynamic light scattering particle size distribution analyzer (e.g., Nanotrac Wave II-Ex150, manufactured by MicrotracBEL Corp.) and a particle size distribution is calculated from the scattering intensity of the scattered light utilizing the principle that the scattering intensity varies with the particle size of the silica-based fine particles.

### (2) Average Circularity

The circularity of the surface-treated sol-gel silica particles according to the present invention is defined as [the circumference of a circle having an area equal to the area of a particle/the perimeter of the particle] when the particle is two-dimensionally projected, and the average circularity is the average of the circularities of any ten silica particles observed with a scanning electron microscope. The average circularity of the surface-treated sol-gel silica particles according to the present invention is 0.80 to 1.0, and preferably 0.92 to 1.0. It is not preferable that the average circularity be less than 0.80 because, in such a case, the proportion of irregularly shaped particles increases, which tends to cause toner contamination.

### (3) Refractive Index

The refractive index indicates the internal voids of the surface-treated sol-gel silica particles, and is 1.380 to 1.420. It is not preferable that the refractive index be less than 1.380 because it indicates that a large number of voids are present and the crosslinked structure of the sol-gel silica particles is brittle. It is also not preferable that the refractive index be more than 1.420 because, in such a case, the number of voids is small while the specific gravity is large, which may result in a reduction in the charge amount or the adhesive force to toner particles.

In the present invention, the refractive index of the surface-treated sol-gel silica particles is determined by adding the surface-treated sol-gel silica particles to a mixed solvent of toluene (refractive index: 1.4962) and methyl isobutyl ketone (refractive index: 1.3958) to form a dispersion, adjusting the refractive index by changing the compounding ratio of the above solvents, and defining the refractive index of the surface-treated sol-gel silica particles as the refractive index of the mixed solvent at which the visible light transmittance of the dispersion is the highest at 25°C (at which the refractive index of the mixed solvent coincides with that of the surface-treated silica fine particles).

### (4) True Density

The true density is 1.7000 g/cm³ or more and less than 1.9000 g/cm³, and preferably 1.7500 to 1.8500 g/cm³. It is not preferable that the true density be less than 1.7000 g/cm³ because, in such a case, the strength of the surface-treated sol-gel silica particles may decrease. It is also not preferable that the true density be 1.9000 /cm³ or more because, in such a case, the mass of one silica particle increases, resulting in a strong impact on toner particles when such surface-treated sol-gel silica particles are used as a toner external additive.

### (5) Volume Resistivity

The volume resistivity is an index of the insulating and electric conducting properties of the particles, and is 10¹¹ Ω·cm or more. It is not preferable that the volume resistivity be less than 10¹¹ Ω·cm because, in such a case, electrical conductivity is exhibited, which may adversely affect the charging characteristics of a toner. As for the upper limit, the volume resistivity is preferably about 5.0 × 10¹⁴ Ω·cm or less from the viewpoint of obtaining charging characteristics appropriate as a toner external additive.

### (6) Ratio of Water Vapor Adsorption Specific Surface Area to Nitrogen Adsorption Specific Surface Area

The ratio of water vapor adsorption specific surface area to nitrogen adsorption specific surface area is an index of hygroscopicity, and the adsorption specific surface area of each gas can be determined by the BET method. Since water molecules (about 2 Å) are smaller than nitrogen molecules (about 3 Å), a small ratio of water vapor adsorption specific surface area to nitrogen adsorption specific surface area indicates that there are voids through which nitrogen molecules can pass but water molecules cannot easily pass.

The ratio of water vapor adsorption specific surface area to nitrogen adsorption specific surface area is 2.00 to 10.0, and preferably 5.00 to 10.0. It is not preferable that the specific surface area ratio be less than 2.00 because, in such a case, the hygroscopicity becomes insufficient, which makes it impossible to properly adjust the charging environment of a toner. It is not preferable that the specific surface area ratio be more than 10.0 because, in such a case, the hygroscopicity becomes excessively high, increasing the impact of humidity on the charge amount of a toner.

### (7) Moisture Absorption Rate

In the present invention, the moisture absorption rate is a value determined by measuring the mass (a) of silica particles that have been exposed for 2 hours under conditions of 30°C and 90 RH% and the dry mass (b) of the silica particles that have been dried for 1 day under conditions of 150°C, and calculating the ratio of the amount of moisture absorption to the dry mass as a percentage [(a) - (b)]/(b) × 100 (% by mass). The moisture absorption rate of the surface-treated sol-gel silica particles according to the present invention is 6.0% to 11% by mass, and preferably 9.0% to 11% by mass. It is not preferable that the moisture absorption rate be less than 6.0% by mass because, in such a case, changes in the charge amount attributable to environmental changes cannot be suppressed. It is also not preferable that the moisture absorption rate be more than 11% by mass because, in such a case, the charge amount tends to decrease.

### [Method for Producing Surface-Treated Sol-Gel Silica Particles]

The surface-treated sol-gel silica particles according to the present invention can be obtained by a production method including the steps (A1) to (A6) defined as:
Step (A1): obtaining a mixed-solvent dispersion of hydrophilic sol-gel silica particles
Step (A2): replacing the dispersion medium with water
Step (A3): heating the aqueous dispersion of hydrophilic sol-gel silica particles
Step (A4): performing a surface treatment with a trifunctional silane compound
Step (A5): replacing the dispersion medium with a ketone-based solvent
Step (A6): performing another surface treatment with a monofunctional silane compound

### • Step (A1): Obtaining Mixed-Solvent Dispersion of Hydrophilic Sol-Gel Silica Particles

This step is a step of obtaining a mixed-solvent dispersion of hydrophilic sol-gel silica particles, by subjecting a tetrafunctional silane compound represented by the following formula (I), a partially hydrolyzed and condensed product thereof, or a mixture of the tetrafunctional silane compound and the partially hydrolyzed and condensed product to hydrolysis and condensation, in a liquid mixture containing a hydrophilic organic solvent and water, in the presence of a basic substance.

Si(OR¹)₄ (I)

(where R¹ independently represents a monovalent hydrocarbon group having 1 to 6 carbon atoms)

In the formula (I) above, R¹ represents a monovalent hydrocarbon group having 1 to 6 carbon atoms, preferably having 1 to 4 carbon atoms, and particularly preferably having 1 or 2 carbon atoms. Examples of the monovalent hydrocarbon group represented by R¹ include a methyl group, an ethyl group, a propyl group, a butyl group, and a phenyl group. Preferable examples are a methyl group, an ethyl group, a propyl group, and a butyl group, and particularly preferable examples are a methyl group and an ethyl group.

Examples of the tetrafunctional silane compound represented by the formula (I) above include tetraalkoxysilanes such as tetramethoxysilane, tetraethoxysilane, tetrapropoxysilane, and tetrabutoxysilane, and also tetraphenoxysilane. Preferable examples are tetramethoxysilane, tetraethoxysilane, tetrapropoxysilane, and tetrabutoxysilane, and particularly preferable examples are tetramethoxysilane and tetraethoxysilane. Examples of the hydrolyzed and condensed product of the tetrafunctional silane compound represented by the formula (I) above include methyl silicate and ethyl silicate.

Examples of the basic substance include ammonia, dimethylamine, and diethylamine. Preferable examples are ammonia and diethylamine, and ammonia is particularly preferable. These basic substances can be used in the form of a solution prepared by dissolving a required amount of the basic substance in water.

The hydrophilic organic solvent is not particularly limited and may be any hydrophilic organic solvent capable of dissolving the compound represented by the formula (I) above and/or a partially hydrolyzed and condensed product thereof, and water. Examples thereof include alcohols such as methanol, ethanol, 1-propanol, 2-propanol, and t-butanol; ethers such as tetrahydrofuran and dioxane; and glycols such as diethylene glycol and dipropylene glycol. Alcohols are preferable. The larger the number of carbon atoms in the alcohol, the larger the particle size of the silica particles generated. Therefore, the type of alcohol can be selected in accordance with the particle size of the desired silica particles.

The amount of water used in this step is preferably 0.5 to 5 mol, more preferably 0.6 to 2 mol, and particularly preferably 0.7 to 1 mol, relative to 1 mol of the total amount of hydrocarbyloxy groups in the tetrafunctional silane compound represented by the formula (I) above and/or a partially hydrolyzed and condensed product thereof. Note that, in the case where the above basic substance is used in the form of a solution prepared by dissolving it in water, the water used to dissolve the basic substance is also included in the "water" used in this step.

The ratio of the hydrophilic organic solvent to the water is, by mass, preferably 0.2 to 10, and more preferably 0.3 to 5, from the viewpoints of affinity between the silica particles and the mixed solvent and ease of production.

The amount of the basic substance is preferably 0.01 to 2 mol, and more preferably 0.03 to 0.5 mol, relative to 1 mol of the total amount of hydrocarbyloxy groups in the tetrafunctional silane compound represented by the formula (I) above and/or a partially hydrolyzed and condensed product thereof, from the viewpoint of the size of the resulting silica particles.

The hydrolysis and condensation of the tetrafunctional silane compound, etc. can be performed by a known method, that is, by adding the tetrafunctional silane compound and the basic substance to a mixture of the hydrophilic organic solvent and water.

The temperature during the hydrolysis and condensation is preferably 20°C to 50°C; the higher the temperature, the smaller the particle size of the resulting silica particles.

The concentration of the mixed-solvent dispersion of hydrophilic sol-gel silica particles obtained in the step (A1) is generally 3% to 15% by mass, and preferably 5% to 10% by mass.

### Step (A2): Replacing Dispersion Medium with Water

This step is a step of replacing the hydrophilic organic solvent in the mixed-solvent dispersion of hydrophilic sol-gel silica particles obtained in the step (A1) with water. The hydrophilic organic solvent replaced in the step (A2) contains the hydrophilic organic solvent used in the step (A1) and volatile by-products generated by condensation, such as alcohols.

As the replacement method, for example, a heating concentration method in which the surface-treated colloidal silica obtained in the step (A1) is heated and concentrated while adding water in an amount equal to or more than the amount of distillate obtained by heating, or a method using a filter, such as ultrafiltration, can be used to easily and economically obtain an aqueous dispersion.

From the viewpoint of stability of the water-dispersed surface-treated colloidal silica, the amount of water added is, by mass, preferably 0.5 to 2 times, more preferably 0.9 to 1.3 times, relative to the total amount of the hydrophilic organic solvent used and the alcohols generated.

### Step (A3): Heating Aqueous Dispersion of Hydrophilic Sol-Gel Silica Particles

This step is a step of allowing the aqueous dispersion of hydrophilic sol-gel silica particles obtained in the step (A2) to react at the reflux temperature of water for 5 hours or more, preferably 7 to 12 hours. It is considered that this step promotes hydrolysis (silanol formation) of alkoxy groups remaining inside the sol-gel silica particles, thereby improving the hygroscopicity of the sol-gel silica particles by increasing affinity with water molecules. The reflux temperature of water may be, for example, 99°C to 100°C when the step (A3) is performed under atmospheric pressure, but is not limited to this temperature range when the pressure differs.

By the step (A3), surface-treated sol-gel silica particles satisfying: (6) the desired ratio of water vapor adsorption specific surface area to nitrogen adsorption specific surface area and (7) moisture absorption rate as described above can be obtained.

### Step (A4): Performing Surface Treatment with Trifunctional Silane Compound

This step is a step of adding a trifunctional silane compound represented by the following formula (II), a partially hydrolyzed and condensed product thereof, or a mixture thereof to the aqueous dispersion of hydrophilic sol-gel silica particles obtained after undergoing the step (A3) to introduce an R²SiO_{3/2} unit onto the surface of the sol-gel silica particles to obtain an aqueous dispersion of preliminarily surface-treated sol-gel silica particles.

R²Si(OR³)₃ (II)

wherein R² represents a monovalent hydrocarbon group having 1 to 20 carbon atoms, which may be substituted with a halogen atom, and R³ independently represents a monovalent hydrocarbon group having 1 to 6 carbon atoms.

In the formula (II) above, R² represents a monovalent hydrocarbon group having 1 to 20 carbon atoms, preferably a monovalent hydrocarbon group having 1 to 10 carbon atoms, and particularly preferably a monovalent hydrocarbon group having 1 to 3 carbon atoms. Examples of the monovalent hydrocarbon group represented by R² include alkyl groups such as a methyl group, an ethyl group, a propyl group, an isopropyl group, a butyl group, a hexyl group, an octyl group, and a decyl. A methyl group, an ethyl group, and a propyl group are particularly preferable. Some or all of the hydrogen atoms of these monovalent hydrocarbon groups may be substituted with halogen atoms such as fluorine, chlorine, or bromine atoms, preferably fluorine atoms.

In the formula (II) above, R³ represents a monovalent hydrocarbon group having 1 to 6 carbon atoms, preferably having 1 to 4 carbon atoms, particularly preferably having 1 or 2 carbon atoms. Examples of the monovalent hydrocarbon group represented by R³ include a methyl group, an ethyl group, a propyl group, a butyl group, and a phenyl group. Preferable examples are a methyl group, an ethyl group, a propyl group, and a butyl group, and particularly preferable examples are a methyl group and an ethyl group.

Specific examples of the trifunctional silane compound represented by the formula (II) above include methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, butyltrimethoxysilane, butyltriethoxysilane, hexyltrimethoxysilane, 3,3,3-trifluoropropyltrimethoxysilane, and (heptadecafluoro-1,1,2,2-tetrahydrodecyl)trimethoxysilane.

The amount of the trifunctional silane compound represented by the formula (II) used is 0.01 to 0.5 mol, preferably 0.01 to 0.1 mol, per 1 mol of Si atoms in the hydrophilic sol-gel silica particles.

The reaction conditions in the step (A4) are not limited, but a reaction temperature of 20°C to 60°C and a reaction time of 1 to 24 hours are preferable.

### Step (A5): Replacing Dispersion Medium with Ketone-Based Solvent

This step is a step of replacing the dispersion medium in the aqueous dispersion of preliminarily surface-treated sol-gel silica particles obtained in the step (A4), which is composed of, for example, water, the hydrophilic organic solvent, and volatile by-products generated by condensation, such as alcohols, with a ketone-based solvent.

Specific examples of the ketone-based solvent include methyl ethyl ketone, methyl isobutyl ketone, and acetylacetone, and methyl isobutyl ketone is preferable.

From the viewpoints of suppressing aggregation of silica particles and the concentration of the reaction system in the subsequent surface treatment step using a monofunctional silane compound, the amount of the ketone-based solvent added is, by mass, preferably 0.5 to 5 times, and more preferably 1 to 2 times, relative to the preliminarily surface-treated sol-gel silica particles obtained in the step (A4).

Examples of the method for replacing the hydrophilic organic solvent, water, and volatile by-products generated by condensation, such as alcohols, in the dispersion of hydrophobic spherical silica particles with the ketone-based solvent include methods such as concentration (under atmospheric or reduced pressure) and ultrafiltration using a filter. A preferable method is to add a ketone-based solvent having a higher boiling point than those of water and the hydrophilic organic solvent contained in the aqueous dispersion of preliminarily surface-treated sol-gel silica particles obtained in the step (A4) to the aqueous dispersion of preliminarily surface-treated sol-gel silica particles obtained in the step (A4), followed by concentration.

### Step (A6): Performing Another Surface Treatment with Monofunctional Silane Compound

This step is a step of adding a silazane compound represented by the following formula (III), a monofunctional silane compound represented by the following formula (IV), or a mixture thereof, to the ketone-based solvent dispersion of preliminarily surface-treated sol-gel silica particles obtained in the step (A5), in an amount of 0.1 to 0.5 mol per 1 mol of Si atoms in the preliminarily surface-treated sol-gel silica particles, to introduce an R⁴₃SiO_{1/2} unit onto the surface of the preliminarily surface-treated sol-gel silica particles to obtain surface-treated sol-gel silica particles.

R⁴₃SiNHSiR⁴₃ (III)

R⁴₃SiX (IV)

wherein R⁴ independently represents a monovalent hydrocarbon group having 1 to 6 carbon atoms, which may be substituted with a halogen atom, and X represents a hydroxyl group, an alkoxy group having 1 to 6 carbon atoms, or a chlorine atom.

In the formulae (III) and (IV) above, R⁴ is preferably a monovalent hydrocarbon group having 1 to 4 carbon atoms, and particularly preferably a monovalent hydrocarbon group having 1 or 2 carbon atoms. Examples of the monovalent hydrocarbon group represented by R⁴ include alkyl groups such as a methyl group, an ethyl group, a propyl group, an isopropyl group, and a butyl group. Preferable examples are a methyl group, an ethyl group, and a propyl group, and particularly preferable examples are a methyl group and an ethyl group. Some or all of the hydrogen atoms of these monovalent hydrocarbon groups may be substituted with halogen atoms such as fluorine, chlorine, or bromine atoms, preferably fluorine atoms.

The alkoxy group represented by X is preferably an alkoxy group having 1 to 4 carbon atoms, and a methoxy group and an ethoxy group are particularly preferable.

Examples of the silazane compound represented by the formula (III) above include hexamethyldisilazane and hexaethyldisilazane, and hexamethyldisilazane is preferable. Examples of the monofunctional silane compound represented by the formula (IV) above include monosilanol compounds such as trimethylsilanol and triethylsilanol; monochlorosilanes such as trimethylchlorosilane and triethylchlorosilane; and monoalkoxysilanes such as trimethylmethoxysilane and trimethylethoxysilane, and trimethylsilanol and trimethylmethoxysilane are preferable.

The amount of the compounds represented by the formulae (III) and (IV) used is preferably 0.1 to 0.5 mol, more preferably 0.2 to 0.4 mol, and particularly preferably 0.25 to 0.35 mol, per 1 mol of Si atoms in the preliminarily surface-treated sol-gel silica particles. Within such a range, suitable positive chargeability, environmental charging characteristics, and flowability can be obtained.

The reaction conditions for the surface treatment in the step (A6) are preferably a reaction temperature of 40°C to 130°C and a reaction time of 1 to 10 hours; more preferably, a reaction temperature of 60°C to 120°C and a reaction time of 2 to 8 hours.

After the reaction, the ketone-based solvent, water, and volatile by-products such as alcohols are appropriately removed from the ketone-based solvent dispersion of the surface-treated sol-gel silica particles, thereby obtaining the surface-treated sol-gel silica particles.

### [External Additive for Electrostatic Image Developing Toner]

The surface-treated sol-gel silica particles according to the present invention can be suitably used as a toner external additive, particularly as an external additive for electrostatic image developing toner. The amount of the toner external additive employing the surface-treated sol-gel silica particles according to the present invention added to a toner is preferably 0.01 to 20 parts by mass, further preferably 0.1 to 5 parts by mass, relative to 100 parts by mass of the toner. The addition amount is preferably 0.01 parts by mass or more because, in such a case, the amount of adhesion to the toner is sufficient, enabling sufficient flowability of the toner. It is also preferable from an economic viewpoint that the addition amount be 20 parts by mass or less because, in such a case, it favorably affects the chargeability of the toner.

The toner to which the external additive for electrostatic image developing toner employing the surface-treated sol-gel silica particles according to the present invention is added may be any known toner composed primarily of a binder resin and a colorant. A charge-controlling agent may also be added as needed. The toner can be used as a one-component developer, and can also be used as a two-component developer by mixing the toner with a carrier. In the case of use as a two-component developer, the external additive for electrostatic image developing toner according to the present invention is not necessarily added to the toner in advance; alternatively, it may be added upon mixing the toner with the carrier to coat the surface of the toner. As the carrier, any known carrier such as iron powder or a carrier obtained by coating the surface of iron powder with a resin can be used.

### Examples

The present invention is specifically described below with reference to working examples and comparative examples. It should be noted that the following working examples are not intended to limit the present invention in any way. Various evaluations such as the measurement of particle size distribution and the observation of particle shape of the silica particles obtained in the working examples and comparative examples were conducted under the following conditions. The results are as shown in Table 1.

### [(1) Median Diameter Measured by Dynamic Light Scattering Method]

A silica particle dispersion was diluted with methanol such that the silica particles accounted for 0.5% by mass, and the particle size distribution after irradiating the dispersion with ultrasonic waves for 10 minutes was measured using a particle size distribution analyzer (Nanotrac Wave II-EX150, manufactured by MicrotracBEL Corp.) which employs a dynamic light scattering method. The median diameter was calculated on the basis of the obtained volume-based particle size distribution.

### [(2) Average Circularity]

The silica particles were observed using a field emission scanning electron microscope (model S-4700, manufactured by Hitachi High-Technologies Corporation) to determine their shapes. The circularity of each particle projected in two dimensions was determined as [the circumference of a circle having an area equal to the particle area]/[the perimeter of the particle], and the average of the circularities of ten silica particles was defined as the average circularity.

### [(3) Refractive Index]

To 20 g of a mixed solvent of toluene (refractive index: 1.4962) and methyl isobutyl ketone (refractive index: 1.3958), 1 g of the surface-treated silica fine particles was added to form a dispersion. The refractive index was adjusted by changing the compounding ratio of the solvents, and the refractive index of the mixed solvent at which the visible light transmittance of the dispersion was the highest was defined as the refractive index of the silica particles. The refractive index of the mixed solvent was a value measured at 25°C using a digital refractometer (RX-9000α, manufactured by ATAGO CO., LTD), and the visible light transmittance of the dispersion was an average of transmittance of light having wavelengths of 380 to 780 nm measured at 25°C using a spectrophotometer (U-3900H, manufactured by Hitachi High-Tech Science Corporation).

### [(4) True Density]

The true density of the silica particles was measured using an automatic true density measuring device (AUTO TRUE DENSER MAT-7000, manufactured by Seishin Enterprise Co., Ltd.) employing a liquid displacement method.

### [(5) Volume Resistivity]

The volume resistivity of the silica particles under a load of 4.0 kN was measured using a powder resistivity measuring system (MCP-PD51, manufactured by Mitsubishi Chemical Analytech Co., Ltd.) with a four-probe electrode unit.

### [(6) Ratio of Water Vapor Adsorption Specific Surface Area to Nitrogen Adsorption Specific Surface Area]

The ratio of the water vapor adsorption specific surface area to the nitrogen adsorption specific surface area was determined by measuring the specific surface area of the silica particles with respect to each of a water vapor medium and a nitrogen medium by the BET one-point method using a high-precision gas adsorption measuring device (BELSORP MAX II, manufactured by MicrotracBEL Corp.).

### [(7) Moisture Absorption Rate]

The mass (a) of the silica particles after exposure for 2 hours under conditions of 30°C and 90 RH% and the dry mass (b) of the silica particles after drying for 1 day under conditions of 150°C were measured, and the moisture absorption rate relative to the dry mass was calculated as [(a) - (b)]/(b) × 100 (% by mass).

### [Working Example 1-1]

### • Step (A1): Obtaining Mixed-Solvent Dispersion of Hydrophilic Sol-Gel Silica Particles

A 3-liter glass reactor equipped with a stirrer, a dropping funnel, and a thermometer was charged with 623.7 g of methanol, 41.4 g of water, and 49.8 g of 28% aqueous ammonia, and the resulting mixture was stirred. The temperature of the resulting solution was adjusted to 35°C, and while stirring, dropwise addition of 1163.7 g (7.66 mol) of tetramethoxysilane and 418.1 g of 5.4% aqueous ammonia was simultaneously started. The former was added over 6 hours, and the latter over 4 hours. After completion of the dropwise addition, stirring was continued for another 0.5 hours to perform hydrolysis to obtain 2,295 g of a mixed-solvent dispersion of hydrophilic sol-gel silica particles.

### • Step (A2): Replacing Dispersion Medium with Water

A distillation adapter and a condenser were attached to the reactor after the step (A1). The temperature was increased to 60°C to 70°C to distill off 1132 g of methanol, followed by addition of 1200 g of water. Subsequently, the temperature was increased to 70°C to 90°C to distill off 273 g of methanol to obtain an aqueous dispersion of hydrophilic sol-gel silica particles.

### • Step (A3): Heating Aqueous Dispersion of Hydrophilic Sol-Gel Silica Particles

After the step (A2), the internal temperature of the aqueous dispersion of hydrophilic sol-gel silica particles was maintained at 99°C to 100°C, and stirring was performed for 10 hours under reflux.

### • Step (A4): Performing Surface Treatment with Trifunctional Silane Compound

After the step (A3), 11.6 g of methyltrimethoxysilane (corresponding to 0.1 mol per 1 mol of Si atoms in the silica) was added dropwise to the reactor at 25°C over 0.5 hours. Subsequently, stirring was performed at 25°C for 12 hours to obtain an aqueous dispersion of preliminarily surface-treated sol-gel silica particles.

### • Step (A5): Replacing Dispersion Medium with Ketone-Based Solvent

After the step (A4), 1440 g of methyl isobutyl ketone was added to the reactor at 25°C. The resulting mixture was heated to 80°C to 110°C to distill off a liquid mixture of methanol and water over 10 hours to obtain a ketone-based solvent dispersion of preliminarily surface-treated sol-gel silica particles.

### • Step (A6): Performing Another Surface Treatment with Monofunctional Silane Compound

After the step (A5), 357.6 g of hexamethyldisilazane (corresponding to 0.29 mol per 1 mol of Si atoms in the silica) was added to the reactor at 25°C. The resulting mixture was allowed to react at a reaction temperature of 120°C for 8 hours to perform trimethylsilylation of the surface of the silica particles. Subsequently, the dispersion medium was distilled off under reduced pressure to obtain 470 g of white surface-treated sol-gel silica particles (i).

### [Working Example 1-2]

The same procedure as in the working example 1-1 was performed except that, in the working example 1-1, the reaction temperature in the step (A1) was changed to 42°C and the time during which stirring was performed under reflux in the step (A3) was changed to 12 hours to obtain 463 g of surface-treated sol-gel silica particles (ii).

### [Working Example 1-3]

The same procedure as in the working example 1-1 was performed except that, in the working example 1-1, the reaction temperature in the step (A1) was changed to 45°C and the time during which stirring was performed under reflux in the step (A3) was changed to 11 hours to obtain 471 g of surface-treated sol-gel silica particles (iii).

### [Working Example 1-4]

The same procedure as in the working example 1-1 was performed except that, in the working example 1-1, the reaction temperature in the step (A1) was changed to 25°C and the time during which stirring was performed under reflux in the step (A3) was changed to 9 hours to obtain 468 g of surface-treated sol-gel silica particles (iv).

### [Comparative Example 1-1]

The same procedure as in the working example 1-1 was performed except that, in the working example 1-1, the step (A3) was not performed, to obtain 474 g of surface-treated sol-gel silica particles (v).

### [Comparative Example 1-2]

The same procedure as in the working example 1 was performed except that, in the working example 1-1, the time during which stirring was performed under reflux in the step (A3) was changed to 4 hours to obtain 472 g of surface-treated sol-gel silica particles (vi).

**[Table 1]**

| | Surface-treated sol-gel silica particles | (1) | (2) | (3) | (4) | *(5)* | (6) | (7) |
|---|---|---|---|---|---|---|---|---|
| | | Median diameter (nm) | Average circularity | Refractive index | True density (g/cm³) | Volume resistivity (Ω·cm) | Ratio of water vapor adsorption specific surface area to nitrogen adsorption specific surface area | Moisture absorption rate (mass%) |
| Working example 1-1 | (i) | 110 | 0.92 | 1.392 | 1.8253 | 1.131×10¹⁴ | 7.32 | 9.8 |
| Working example 1-2 | (ii) | 92 | 0.91 | 1.392 | 1.8248 | 9.466×10¹³ | 7.21 | 9.5 |
| Working example 1-3 | (iii) | 71 | 0.90 | 1.392 | 1.8292 | 1.153×10¹⁴ | 7.08 | 9.2 |
| Working example 1-4 | (iv) | 172 | 0.91 | 1.392 | 1.8266 | 1.142×10¹⁴ | 9.96 | 10.5 |
| Comparative example 1-1 | (v) | 111 | 0.90 | 1.389 | 1.7234 | 1.331×10¹⁴ | 0.95 | 2.9 |
| Comparative example 1-2 | (vi) | 109 | 0.90 | 1.389 | 1.7240 | 1.225×10¹⁴ | 1.01 | 3.8 |

As shown in Table 1, the surface-treated sol-gel silica particles of the working examples 1-1 to 1-4 exhibited high moisture absorptivity. In contrast, in the comparative examples 1-1 and 1-2, the ratio of water vapor adsorption specific surface area to nitrogen adsorption specific surface area was small, resulting in poor moisture absorptivity.

### [Working Examples 2-1 to 2-4 and Comparative Examples 2-1 and 2-2]

### (Production of Toner Mixed with External Additive)

A mixture of 96 parts by mass of a polyester resin having a Tg of 60°C and a softening point of 110°C and 4 parts by mass of Carmine 6BC (manufactured by Sumika Color Co., Ltd.) as a colorant was melt-kneaded, pulverized, and classified to obtain a toner having a volume median diameter of 7 µm. With 10 g of the toner, 0.2 g of each of the surface-treated sol-gel silica particle samples obtained in the working examples 1-1 to 1-4 and the comparative examples 1-1 and 1-2 were mixed using a sample mill to obtain a toner mixed with an external additive.

### (Preparation of Two-Component Developer)

With 3 parts by mass of the toner mixed with an external additive, 97 parts by mass of ferrite (EL-35, manufactured by Powdertech Co., Ltd.) as a carrier were mixed to prepare a two-component developer. Measurements were performed on the two-component developer obtained in the above step according to the following methods (8) to (12). Table 2 shows the results.

### (8) Toner Charge Amount

The above two-component developer was exposed for 1 day under both high-temperature and high-humidity conditions (30°C, 90% RH) and low-temperature and low-humidity conditions (10°C, 15% RH). After the exposure, the charge amount of each sample that had been triboelectrically charged under the same conditions was measured using a blowoff powder charge measuring device (TB-200, manufactured by Toshiba Chemical Co., Ltd.).

### (9) Toner Adhesion to Photosensitive Member

The above two-component developer was charged into a developing device equipped with an organic photosensitive member, and a printing test of 30,000 sheets was performed under an environment of 25°C and 50% RH. In this test, the adhesion of the toner to the photosensitive member could be detected as white spots in a solid image. The degree of the white spots was evaluated as "many" when the number of white spots per 1 cm² was 10 or more, "few" when the number was 1 to 9, and "none" when the number was 0.

### (10) Wear of Photosensitive Member

In the printing test of (9) above, the wear of the photosensitive member detected as image disturbance was evaluated according to the following criteria.
A: no image disturbance
B: no significant image disturbance
C: image disturbance present

### (11) Evaluation of Image Defect (White Spot)

The above two-component developer was exposed for 1 day under an environment of 30°C and 90% RH, and then a solid image of 20 cm × 20 cm (image density: 100%) was continuously printed on 5,000 sheets. Subsequently, the two-component developer was again left to stand under an environment of 30°C and 90% RH. The above procedure was repeated 60 times, and a total of 300,000 sheets were printed. The 10th print on the first day was referred to as printed matter 1, and the final print on the last day was referred to as printed matter 2.

The presence or absence of image defects (white spots) observed in the above-mentioned printed matter 2 by visual inspection was evaluated according to the following criteria.
A: no image defect (no white spot) observed by visual inspection
B: 1 to 4 white spots (white particle-like image defects) observed by visual inspection
C: 5 to 9 white spots observed by visual inspection
D: 10 or more white spots observed by visual inspection

### (12) Evaluation of Density Change (ΔE)

With respect to the change in density of the printed matter 2 relative to the printed matter 1, the color difference (ΔE) in the CIE1976 (L*a*b*) color space was measured using a reflection densitometer X-Rite 938 (manufactured by X-Rite, Inc.) in accordance with JIS Z 8781-5, and was evaluated according to the following criteria.
A: the difference ΔE was less than 1
B: the difference ΔE was 1 or more and less than 2.5
C: the difference ΔE was 2.5 or more and less than 3.0
D: the difference ΔE was 3.0 or more

**[Table 2]**

| | Surface-treated sol-gel silica particles | (8) | | (9) | (10) | (11) | (12) |
|---|---|---|---|---|---|---|---|
| | | Toner charge amount (µC/g) | | Toner adhesion to photosensitive member | Wear of Photosensitive Member | Image Defect | Density change (ΔE) |
| | | 30°C, 90%RH | 10°C, 15%RH | | | | |
| Working example 2-1 | (i) | -30 | -32 | None | A | A | A |
| Working example 2-2 | (ii) | -38 | -41 | None | A | A | A |
| Working example 2-3 | (iii) | -43 | -45 | None | A | A | A |
| Working example 2-4 | (iv) | -15 | -18 | None | A | A | A |
| Comparative example 2-1 | (v) | -15 | -38 | Few | B | D | D |
| Comparative example 2-2 | (vi) | -16 | -40 | Few | B | C | C |

As shown in Table 2, the two-component developers employing the surface-treated sol-gel silica particles obtained in the working examples 1-1 to 1-4 as toner external additives exhibited reduced changes in the toner charge amount depending on the environment and no printing image defects. Since the surface-treated sol-gel silica particles according to the present invention have appropriate hygroscopicity, it is considered that, in a high-humidity environment, they absorbed moisture present in the vicinity of the toner particle surface to suppress a decrease in charge amount, while in a low-humidity environment, moisture retained inside the silica particles was released, thereby reducing environmental changes in the vicinity of the toner particle surface.

In contrast, the two-component developers employing the surface-treated sol-gel silica particles obtained in the comparative examples 1-1 and 1-2 as toner external additives exhibited large changes in the toner charge amount depending on the environment and had poor printing properties.

## Claims

1. A surface-treated sol-gel silica particle comprising, on a surface thereof,
an R²SiO_{3/2} unit, wherein R² represents a monovalent hydrocarbon group having 1 to 20 carbon atoms, the hydrocarbon group being optionally substituted with a halogen atom; and
an R⁴₃SiO_{1/2} unit, wherein R⁴ independently represents a monovalent hydrocarbon group having 1 to 6 carbon atoms, the hydrocarbon group being optionally substituted with a halogen atom,
wherein the surface-treated sol-gel silica particle has:
(1) a median diameter, measured by a dynamic light scattering method, of 50 to 300 nm;
(2) an average circularity of 0.80 to 1.0;
(3) a refractive index of 1.380 to 1.420;
(4) a true density of 1.7000 g/cm³ or more and less than 1.9000 g/cm³;
(5) a volume resistivity of 10¹¹ Ω·cm or more;
(6) a ratio, represented by water vapor adsorption specific surface area/nitrogen adsorption specific surface area, of 2.00 to 10.0; and
(7) a moisture absorption rate, after exposure at 30°C/90% RH for 2 hours, of 6.0% to 11% by mass, with respect to a dry mass after drying at 150°C for 1 day.

2. The surface-treated sol-gel silica particle according to claim 1, wherein R² and R⁴ are methyl groups.

3. A method for producing the surface-treated sol-gel silica particle according to claim 1, the method comprising the steps (A1) to (A6) of:
(A1) subjecting a tetrafunctional silane compound represented by formula (I) below, a partially hydrolyzed and condensed product thereof, or a mixture of the tetrafunctional silane compound and the partially hydrolyzed and condensed product to hydrolysis and condensation, in a liquid mixture containing a hydrophilic organic solvent and water, in the presence of a basic substance, to obtain a mixed-solvent dispersion of hydrophilic sol-gel silica particles,
Si(OR¹)₄ (I)
wherein R¹ independently represents a monovalent hydrocarbon group having 1 to 6 carbon atoms;
(A2) replacing the hydrophilic organic solvent in a dispersion medium of the mixed-solvent dispersion of hydrophilic sol-gel silica particles obtained in the step (A1) with water, to obtain an aqueous dispersion of hydrophilic sol-gel silica particles.
(A3) refluxing the aqueous dispersion of hydrophilic sol-gel silica particles obtained in the step (A2) at a reflux temperature of water for 5 hours or more;
(A4) adding a trifunctional silane compound represented by formula (II) below, a partially hydrolyzed and condensed product thereof, or a mixture of the trifunctional silane compound and the partially hydrolyzed and condensed product to the aqueous dispersion of hydrophilic sol-gel silica particles obtained after undergoing the step (A3), in an amount of 0.01 to 0.5 mol per 1 mol of Si atoms in the hydrophilic sol-gel silica particles, to introduce an R²SiO_{3/2} unit onto a surface of the hydrophilic sol-gel silica particles to obtain an aqueous dispersion of preliminarily surface-treated sol-gel silica particles,
R²Si(OR³)₃ (II)
wherein R² represents a monovalent hydrocarbon group having 1 to 20 carbon atoms, the hydrocarbon group being optionally substituted with a halogen atom, and R³ independently represents a monovalent hydrocarbon group having 1 to 6 carbon atoms;
(A5) replacing the dispersion medium of the aqueous dispersion of preliminarily surface-treated sol-gel silica particles obtained in the step (A4) with a ketone-based solvent to obtain a ketone-based solvent dispersion of preliminarily surface-treated sol-gel silica particles; and
(A6) adding a silazane compound represented by formula (III) below, a monofunctional silane compound represented by formula (IV) below, or a mixture thereof, to the ketone-based solvent dispersion of preliminarily surface-treated sol-gel silica particles obtained in the step (A5), in an amount of 0.1 to 0.5 mol per 1 mol of Si atoms in the preliminarily surface-treated sol-gel silica particles, to introduce an R⁴₃SiO_{1/2} unit onto a surface of the preliminarily surface-treated sol-gel silica particles to obtain surface-treated sol-gel silica particles,
R⁴₃SiNHSiR⁴₃ (III)
R⁴₃SiX (IV)
wherein R⁴ independently represents a monovalent hydrocarbon group having 1 to 6 carbon atoms, the hydrocarbon group being optionally substituted with a halogen atom, and X represents a hydroxyl group, an alkoxy group having 1 to 6 carbon atoms, or a chlorine atom.

4. The method for producing the surface-treated sol-gel silica particle according to claim 3, wherein R² and R⁴ are methyl groups.

5. An external additive for an electrostatic image developing toner, the external additive comprising the surface-treated sol-gel silica particle according to claim 1 or 2.
